# DEMANDE DE BREVET EUROPEEN

(11) **EP 4 787 827 A1**
(43) Date de publication de la demande: **05.08.2026**
(21) Numéro de dépôt: 26154144.5
(22) Date de dépôt: 26.01.2026
(51) Int. Cl.: H04M 11/02, G07C 9/27, H04W 12/06, G07C 9/20, G07C 9/00

(54) **SYSTÈME DE CONTRÔLE D'ACCÈS À UN BÂTIMENT, METTANT EN OEUVRE UN IDENTIFIANT UNIQUE APTE À ÊTRE LU PAR UN ORDIPHONE**

(30) Priorité: 04.02.2025 FR 2501115
(71) Demandeur: Cogelec, 85290 Mortagne-sur-Sèvre (FR)
(72) Inventeur: SCHIRM, Sébastien, 85600 MONTAIGU (FR)
(74) Mandataire: Lequien, Philippe

(57) **Abrégé**

L'invention concerne un système de contrôle d'accès à un bâtiment, du type mettant en œuvre :
- un identifiant unique (10) apte à être lu un ordiphone (2), présent sur un support (1) disposé à proximité d'une porte d'entrée (P),
- un module de communication (3), incluant un identifiant numérique (32) et une base de données (33) des résidents, le module de communication (3) comprenant de plus :
- des moyens de communication de proximité (30) aptes à communiquer avec l'ordiphone (2),
- une unité informatique de module (34) paramétrée pour recevoir, de la part de l'ordiphone (2), un signal de lecture de l'identifiant unique (10),
- une plateforme informatique (4),

caractérisé en ce que l'unité informatique de module (34) est paramétrée pour émettre, à l'ordiphone (2), un jeton numérique horodaté (35) d'identification du module de communication avec la liste de résidents, et un lien de communication avec la plateforme informatique (4), l'unité informatique de plateforme (41) étant paramétrée pour :
- vérifier que la conformité du jeton numérique horodaté (35) ;
- émettre, en cas de conformité de la correspondance et de l'horodatage, un appel vers le numéro d'appel du résident.

## Description

### Domaine Technique

Le domaine de l'invention est celui de la conception et de la fabrication d'un système de contrôle d'accès.

Un système de contrôle d'accès permet l'entrée et la sortie dans une zone.

Il est connu de l'état de la technique des systèmes mettant en œuvre des dispositifs de reconnaissance qui sont situés au niveau des entrées et des sorties de cette zone à contrôler.

Les entrées et les sorties de cette zone comprennent des portes dont l'ouverture et la fermeture peuvent être pilotées par le système.

Par l'expression porte, il est plus généralement entendu un dispositif obturant un passage, d'un piéton ou d'un véhicule, tel qu'une barrière, un sas, un tourniquet, une porte au sens propre du terme.

Par l'expression ouverture, ou l'expression fermeture, il est entendu le passage de la porte d'une position d'obturation d'un passage, jusqu'à une position de libération du passage. Il est également entendu que l'ouverture ou la fermeture ne peuvent concerner que l'actionnement de moyens de verrouillage de la porte dans une position d'obturation du passage.

Classiquement, de tels systèmes de contrôle d'accès actuels mettent en œuvre :
- une flotte de badges ayant chacun un numéro informatique, au moins un lecteur de badge, relié à la porte, le lecteur intégrant un identifiant informatique et des moyens de communication de proximité ;
- un module de télécommunication comprenant :
   - des premiers moyens de communication aptes à communiquer avec les moyens de communication de proximité du lecteur de badge par l'intermédiaire d'un réseau de proximité, un nom de réseau étant attribué au réseau de proximité,
   - des deuxièmes moyens de communication de type longue distance,
- une plateforme informatique comprenant des moyens de communication de plateforme aptes à communiquer avec les deuxièmes moyens de communication du module de télécommunication et incluant une base de données listant les numéros informatiques de badge, les identifiants informatiques des lecteurs de badges et des noms de réseau de proximité, la plateforme informatique comprenant de plus une unité informatique paramétrée pour :
   - recevoir une requête numérique d'ouverture de porte incluant un numéro informatique de badge et un identifiant de lecteur de badge,
   - vérifier une correspondance entre le numéro informatique de badge et un identifiant de lecteur de badge,
   - émettre, après vérification de la correspondance, une instruction d'ouverture de porte ou de non ouverture à destination du lecteur de badge.

Il a également été proposé des systèmes de contrôle d'accès mettant en œuvre des interphones dits dématérialisés.

Selon cette technique, il est présenté à l'entrée de l'immeuble un QR code qui permet à un visiteur, après avoir scanné le QR code sur son ordiphone, d'afficher sur l'écran de son ordiphone l'équivalent d'un interphone donnant accès aux fonctions classiques d'appel d'une platine d'entrée.

Selon la technique décrite par le brevet publié sous le numéro EP 3 227 864, il est proposé un procédé pour fournir à un visiteur un accès contrôlé dans un bâtiment, comprenant les étapes consistant à :
- fournir des informations d'identification d'entrée à un ordiphone du visiteur lorsque celui-ci est à proximité immédiate d'une entrée du bâtiment, grâce à un identifiant unique de l'entrée tel qu'un QR code ;
- envoi par l'ordiphone de l'identifiant unique à un serveur distant ;
- réception par l'ordiphone d'une liste de résidents du bâtiment envoyée par le serveur sur la base de l'identifiant unique d'entrée ;
- sélection, sur l'ordiphone, d'un résident de la liste des résidents ;
- établissement d'un lien entre l'ordiphone du visiteur et un l'ordiphone du résident sélectionné ;
- et transmission des informations d'autorisation d'accès au dispositif de contrôle d'accès pour contrôler l'accès du visiteur dans le bâtiment par l'entrée.

### Problème technique

Selon cette technique, l'ordiphone du visiteur est directement mis en communication avec le serveur distant, et s'affranchit d'une passerelle de communication intégrée au bâtiment et par l'intermédiaire de laquelle l'ordiphone du visiteur communiquerait avec le serveur.

Toutefois, un tel système ne fonctionne que si l'ordiphone du visiteur accède à un réseau de communication longue distance, lui permettant d'être mis en liaison avec le serveur distant. En d'autres termes, en cas d'absence de réseau, même temporaire, le visiteur n'accède pas aux fonctions de mise en relation avec un résident et, a fortiori, aux fonctions de contrôle d'accès à l'entrée du bâtiment. Dans ce cas, il est même impossible pour le visiteur de vérifier que la personne qu'il souhaite visiter est bien à l'adresse à laquelle il se trouve puisqu'il ne peut consulter l'annuaire de ce bâtiment.

Il en va de même si les moyens de communication longue distance du serveur distant sont momentanément défaillants.

L'invention a notamment pour objectif de pallier ces inconvénients de l'art antérieur.

Plus précisément, l'invention a pour objectif de proposer un système de contrôle d'accès à un bâtiment mettant en oeuvre un identifiant unique d'entrée et un module de télécommunication disposé à proximité de la porte d'entrée permettant l'accès à un annuaire de résidents du bâtiment qui s'affranchisse de moyens de communication longue distance avec un serveur distant pour accéder à l'annuaire.

L'invention a également pour objectif de fournir un tel système qui soit fiable quant à l'exploitation de l'identifiant unique d'entrée.

L'invention a aussi pour objectif de fournir un tel système qui soit simple d'utilisation pour les visiteurs du bâtiment.

### Résumé de l'invention

Ces objectifs ainsi que d'autres qui apparaîtront par la suite, sont atteints grâce à l'invention qui a pour objet un Système de contrôle d'accès à un bâtiment, du type mettant en œuvre :
- au moins une porte d'entrée du bâtiment ;
- un identifiant unique apte à être lu un ordiphone, présent sur un support disposé à proximité de la porte d'entrée,
- un module de télécommunication disposé à proximité de la porte d'entrée (P), et incluant un identifiant numérique et une base de données listant des résidents et des numéros d'appel d'ordiphones des résidents, le module de télécommunication comprenant de plus :
   - des moyens de communication longue distance,
   - des moyens de communication de proximité aptes à communiquer avec l'ordiphone,
   - une unité informatique de module paramétrée pour recevoir, de la part d'un ordiphone, un signal de lecture de l'identifiant unique et émettre en retour audit ordiphone une liste de résidents parmi la base de données,
- une plateforme informatique comprenant des moyens de communication de plateforme aptes à communiquer avec les moyens de communication longue distance du module, et une unité informatique de plateforme,
caractérisé en ce que l'unité informatique de module est paramétrée pour émettre, à destination de l'ordiphone et par l'intermédiaire des moyens de communication de proximité, un jeton numérique horodaté d'identification du module avec la liste de résidents, ainsi qu'un lien de communication avec la plateforme informatique pour transmettre à l'unité informatique de plateforme, le jeton numérique d'horodatage avec une sélection d'un résident, l'unité informatique de plateforme étant paramétrée pour :
- vérifier une correspondance entre le jeton numérique horodaté d'identification du module et l'identifiant numérique du module,
- vérifier que le jeton numérique horodaté d'identification du module présente un horodatage s'inscrivant dans une plage de temps prédéterminée ;
- émettre, en cas de conformité de la correspondance et de l'horodatage, un appel vers le numéro d'appel du résident.

L'invention permet donc de fournir au visiteur, par l'intermédiaire de son ordiphone, la liste des résidents du bâtiment par une communication locale de proximité, sans recours à un réseau de communication longue distance.

En outre, le système selon l'invention de vérifier que la personne qui utilise l'identifiant unique d'entrée, est bien à proximité immédiate de la porte d'entrée du bâtiment, ceci par son positionnement dans le champ du réseau de proximité du module de communication qui est lui-même à côté de la porte d'entrée du bâtiment, qui lui permet de recevoir l'annuaire des résidents.

Ce mode de sécurisation est encore renforcé par le recours au jeton numérique horodaté qui implique que le visiteur demande une mise en relation avec un résident dans un temps limité, de l'ordre de la minute par exemple, s'assurant ainsi que le visiteur n'a pas eu le temps de quitter les lieux pour exploiter ultérieurement, de façon plus ou moins bien intentionnée, les possibilités du système.

Avantageusement, l'identifiant unique d'entrée apte à être lu par un ordiphone est un QR code.

La plupart des ordiphones actuels sont pourvus d'une application permettant de lire les QR code, ce qui rend le système utilisable par un grand nombre de visiteurs.

Selon un mode de réalisation avantageux, l'unité informatique de plateforme est paramétrée pour émettre, à destination de l'unité informatique de module une actualisation de la base de données.

Il est ainsi aisé de mettre à jour, à distance, l'annuaire disponible localement au niveau du module de télécommunication disposé à proximité de la porte d'entrée, ceci au fur et à mesure des changements de résidents.

Préférentiellement, l'unité informatique de module est paramétrée pour, après réception d'un signal de lecture de l'identifiant unique d'entrée de la part d'un ordiphone, émettre la liste de résidents sous forme d'une page Web à destination dudit ordiphone.

Selon une solution avantageuse, l'unité informatique de module est paramétrée pour recevoir une tentative infructueuse de communication entre l'ordiphone et l'unité informatique de plateforme et, le cas échéant, relayer la communication entre l'ordiphone et l'unité informatique de plateforme.

Ainsi, si l'ordiphone du visiteur ne dispose pas de réseau lui permettant d'échanger avec le serveur distant, par une communication longue distance, le système lui permet d'accéder aux possibilités de mise en relation grâce au module de télécommunication disposé à proximité de la porte d'entrée, qui se substitut au réseau longue distance de l'ordiphone.

Selon un mode de réalisation particulier, l'unité informatique de plateforme est paramétrée pour émettre, à destination du numéro d'appel du résident, une notification de tentative invalide de mise en relation.

De cette façon, le résident est alerté, ou à tout le moins informé, d'une tentative de mise en relation n'ayant pas été effectué dans les « règles » de fonctionnement du système.

### Brève description des dessins

D'autres caractéristiques et avantages de l'invention apparaîtront plus clairement à la lecture de la description suivante de différents modes de réalisation préférentiels de l'invention, donnés à titre de simples exemples illustratifs et non limitatifs, et de la figure unique annexée :

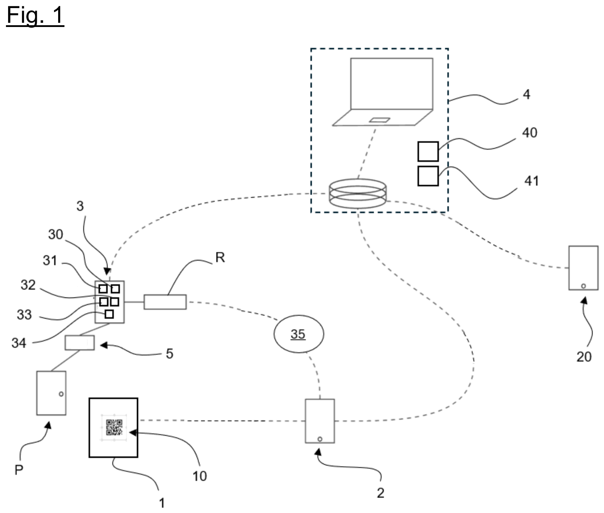

- la figure 1 illustre de façon schématique un système de contrôle d'accès à un bâtiment selon l'invention.

### Description détaillée

En référence à la figure 1, un système de contrôle d'accès selon l'invention met en oeuvre de façon classique en soi :
- au moins une porte d'entrée P d'un bâtiment ;
- un support 1, à proximité de la porte d'entrée P, présentant un identifiant unique 10 apte à être lu par des ordiphones 2 détenus par des visiteurs, l'identifiant pouvant être un QR code,
- un module de télécommunication 3, disposé à proximité de la porte d'entrée P ;
- une plateforme informatique 4, présente dans un site de gestion, destinée à assurer le contrôle d'accès.

Le module de télécommunication procure un accès à un réseau de proximité R auquel les ordiphones sont susceptibles de se connecter.

Le module de télécommunication 3 comprend :
- des moyens de communication de proximité 30, permettant l'échange de données avec les ordiphones 2, ces premiers moyens de communication 30 étant donc aptes à communiquer avec des moyens de communication de proximité des ordiphones, ceci par l'intermédiaire du réseau de proximité R,
- des moyens de communication longue distance 31.

Le module de télécommunication 3 intègre en outre :
- un identifiant numérique 32,
- une base de données 33 listant des résidents et des numéros d'appel d'ordiphones des résidents,
- une unité informatique de module 34 paramétrée pour recevoir, de la part d'un ordiphone, un signal de lecture de l'identifiant unique et émettre en retour audit ordiphone une liste de résidents parmi la base de données.

La plateforme informatique 4 comprend quant à elle des moyens de communication de plateforme 40 aptes à communiquer avec les moyens de communication longue distance du module, et une unité informatique de plateforme 41.

Selon le principe de l'invention, lorsque l'unité informatique de module 34 reçoit, de la part d'un ordiphone 2, un signal de lecture de l'identifiant unique 10, elle émet en retour audit ordiphone, par l'intermédiaire des moyens de communication de proximité 30, la liste de résidents parmi la base de données concomitamment avec un jeton numérique horodaté 35. Selon le présent mode de réalisation, la liste de résidents est émise sous forme d'une page Web à destination de l'ordiphone 2.

Ce jeton numérique horodaté 35 comprend, outre les données numériques d'horodatage (qui peuvent prendre la forme d'une durée d'opérabilité après la délivrance du jeton), l'identifiant numérique du module de télécommunication et un lien de communication avec la plateforme informatique.

Le visiteur peut alors, par l'intermédiaire de son ordiphone 2, sélectionner un résident parmi la liste reçue, et activer le lien de communication avec la plateforme informatique.

Le lien de de communication avec la plateforme informatique comprend des instructions de transmission par l'ordiphone, à la plateforme informatique 4, des données relatives au jeton numérique horodaté 35 d'identification du module et à la sélection du résident.

A réception de ces données, l'unité informatique de plateforme 41 est paramétrée pour vérifier :
- la correspondance entre le jeton numérique horodaté 35 d'identification du module et l'identifiant numérique du module 32,
- que le jeton numérique horodaté d'identification du module présente un horodatage s'inscrivant dans une plage de temps prédéterminée (et/ou que la durée d'opérabilité du jeton n'est pas épuisée).

Si ces conditions sont réunies, alors l'unité informatique de plateforme 41 émet un appel vers le numéro d'appel du résident sélectionné.

Le résident peut alors, par l'intermédiaire de son ordiphone 20, envoyer à l'unité informatique de plateforme 41, une instruction d'ouverture de la porte P, cette instruction étant relayée par l'unité informatique de plateforme 41 à destination du module de télécommunication 3 qui pilote un relais 5 actionnant l'ouverture de la porte P. Il peut bien entendu alternativement décliner la demande du visiteur et refuser l'ouverture de la porte P.

Il est à noter que l'annuaire ou, en d'autres termes, la liste de résidents, mémorisée au sein du module de télécommunication 3 disposé à proximité de la porte d'entrée, est régulièrement mise à jour. Pour ce faire, l'unité informatique de plateforme 41 est paramétrée pour émettre, à destination de l'unité informatique de module 34, une actualisation de sa base de données.

Par ailleurs, l'unité informatique de module 34 est paramétrée pour recevoir une tentative infructueuse de communication entre l'ordiphone 2 d'un visiteur et l'unité informatique de plateforme 41. Dans le cas où une telle tentative infructueuse de communication est détectée, l'unité informatique de module 34 est paramétrée pour relayer la communication entre l'ordiphone 2 et l'unité informatique de plateforme 41.

Selon une autre caractéristique, l'unité informatique de plateforme 41 est paramétrée pour émettre, à destination du numéro d'appel du résident, une notification de tentative invalide de mise en relation. Cela peut être le cas par exemple si la demande de mise en relation est effectuée tandis que le jeton numérique horodaté 35 est expiré.

## Revendications

1. Système de contrôle d'accès à un bâtiment, du type mettant en œuvre :
- au moins une porte d'entrée (P) du bâtiment ;
- un identifiant unique (10) apte à être lu un ordiphone (2), présent sur un support (1) disposé à proximité de la porte d'entrée (P),
- un module de communication (3) disposé à proximité de la porte d'entrée (P), et incluant un identifiant numérique (32) et une base de données (33) listant des résidents et des numéros d'appel d'ordiphones des résidents, le module de communication (3) comprenant de plus :
- des moyens de communication de proximité (30) aptes à communiquer avec l'ordiphone (2),
- des moyens de communication longue distance (31),
- une unité informatique de module (34) paramétrée pour recevoir, de la part de l'ordiphone (2), un signal de lecture de l'identifiant unique (10) et émettre en retour audit ordiphone (2) une liste de résidents parmi la base de données (33),
- une plateforme informatique (4) comprenant des moyens de communication de plateforme (40) aptes à communiquer avec les moyens de communication longue distance (31) du module de communication (3), et une unité informatique de plateforme (41),
**caractérisé en ce que** l'unité informatique de module (34) est paramétrée pour émettre, à destination de l'ordiphone (2) et par l'intermédiaire des moyens de communication de proximité (30), un jeton numérique horodaté (35) d'identification du module de communication avec la liste de résidents, ainsi qu'un lien de communication avec la plateforme informatique (4) pour transmettre à l'unité informatique de plateforme (41), le jeton numérique d'horodatage (35) avec une sélection d'un résident, l'unité informatique de plateforme (41) étant paramétrée pour :
- vérifier une correspondance entre le jeton numérique horodaté (35) et l'identifiant numérique du module (32),
- vérifier que le jeton numérique horodaté (35) présente un horodatage s'inscrivant dans une plage de temps prédéterminée ;
- émettre, en cas de conformité de la correspondance et de l'horodatage, un appel vers le numéro d'appel du résident.

2. Système de contrôle d'accès à un bâtiment selon la revendication 1, **caractérisé en ce que** l'identifiant unique (10) d'entrée apte à être lu par un ordiphone est un QR code.

3. Système de contrôle d'accès à un bâtiment selon l'une des revendications précédentes, **caractérisé en ce que** l'unité informatique de plateforme (41) est paramétrée pour émettre, à destination de l'unité informatique de module (34) une actualisation de la base de données.

4. Système de contrôle d'accès à un bâtiment selon l'une des revendications précédentes, **caractérisé en ce que** l'unité informatique de module (34) est paramétrée pour, après réception d'un signal de lecture de l'identifiant unique (10) d'entrée de la part d'un ordiphone (2), émettre la liste de résidents sous forme d'une page Web à destination dudit ordiphone.

5. Système de contrôle d'accès à un bâtiment selon l'une des revendications précédentes, **caractérisé en ce que** l'unité informatique de module (34) est paramétrée pour recevoir une tentative infructueuse de communication entre l'ordiphone (2) et l'unité informatique de plateforme (41) et, le cas échéant, relayer la communication entre l'ordiphone (2) et l'unité informatique de plateforme (41).

6. Système de contrôle d'accès à un bâtiment selon l'une des revendications précédentes, **caractérisé en ce que** l'unité informatique de plateforme (41) est paramétrée pour émettre, à destination du numéro d'appel du résident, une notification de tentative invalide de mise en relation.
